(19) Europäisches Patentamt
European Patent Office
Office européen des brevets

(11) EP 4 497 780 A1

(12) EUROPEAN PATENT APPLICATION
published in accordance with Art. 153(4) EPC

(43) Date of publication:
**29.01.2025 Bulletin 2025/05**

(21) Application number: **22935442.8**

(22) Date of filing: **31.03.2022**

(51) International Patent Classification (IPC):
***C08L 1/02*** (2006.01) ***C08J 3/20*** (2006.01)
***C08L 23/00*** (2006.01) ***C08L 23/26*** (2025.01)

(52) Cooperative Patent Classification (CPC):
**C08J 3/20; C08L 1/02; C08L 23/00; C08L 23/26**

(86) International application number:
**PCT/JP2022/016616**

(87) International publication number:
**WO 2023/188300 (05.10.2023 Gazette 2023/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Chuetsu-Pulp and Paper Co., Ltd**
**Takaoka-shi, Toyama 933-8533 (JP)**

(72) Inventors:
- **HASHIBA Hiromi**
  **Takaoka-shi Toyama 933-8533 (JP)**
- **YAMAMOTO Yohzoh**
  **Suita-shi, Osaka 565-0851 (JP)**

(74) Representative: **Murgitroyd & Company**
**Murgitroyd House**
**165-169 Scotland Street**
**Glasgow G5 8PL (GB)**

# (54) MOLTEN MIXTURE, COMPOSITION AND MOLDED ARTICLE

(57) The present invention provides a cellulose nanofiber-containing molten mixture excellent in interfacial adhesion with a resin and having high dispersibility in the resin; and a resin composition capable of having, in a molded or formed product thereof, excellent tensile stress at yield and Charpy impact strength while maintaining sufficient mechanical properties. The molten mixture contains a mixture containing a cellulose nanofiber and a solvent; and 0.05 to 1 part by mass of an aqueous polyolefin resin dispersion based on 1 part by mass of the cellulose nanofiber.

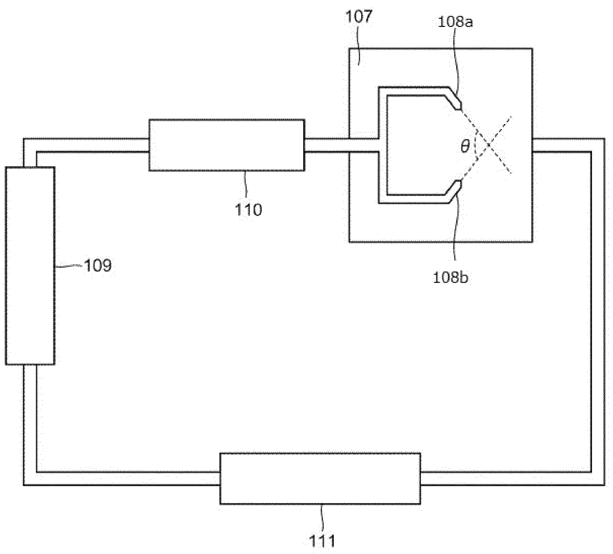


FIG. 1



Processed by Luminess, 75001 PARIS (FR)

## Description

### Technical Field

The present invention relates to a molten mixture, a composition, and a molded article.

### Background Art

In recent years, biomass materials have been attracting attention from the viewpoint of environmental protection, and naturally-derived organic fillers and composite materials with biopolymers have begun to be used as materials for the fields of automobiles, OA electrical and electronic fields, and the like.

The applicant of the present application disclosed in Patent Document 1 a polyolefin resin composition containing a specific range of a terpene phenol-based compound in a resin mixture composed of a cellulose nanofiber obtained by defibrating a polysaccharide by using a high-pressure water stream and a polyolefin resin.

In addition, the applicant of the present application disclosed in Patent Document 2 a molten mixture containing a cellulose nanofiber and a specific range, with respect to 1 part by mass of the cellulose nanofiber, of a styrene-based polymer having a weight average molecular weight in a specific range.

The aforesaid two inventions have indicated the possibility of producing a composition in which a cellulose nanofiber-containing resin composition or molten mixture has been dispersed well in a resin. They have also indicated that each composition is superior to the base resin in mechanical strength values including modulus in flexure. However, there is still a room for further pursuit on enhancement of interfacial adhesion between the resin and the cellulose nanofiber to improve the dispersibility of the cellulose nanofiber in the resin.

In addition, there is also a room for pursuit on improvement of the values of the composition such as tensile stress at yield and Charpy impact strength to provide a molded or formed product having high impact resistance.

### Citation List

#### Patent Documents

Patent Document 1: Japanese Patent No. 6502645
Patent Document 2: Japanese Patent No. 6704551

### Summary of the Invention

#### Problems to be solved by the Invention

In view of the aforesaid problems in the prior art, an object of the present invention is to provide a molten mixture containing a nano natural polymer which has good interfacial adhesion with a resin and at the same time, has high dispersibility in the resin, and a method of producing the molten mixture.

A further object of the present invention is to provide a composition capable of having excellent tensile stress at yield and Charpy impact strength while maintaining sufficient mechanical properties.

A still further object of the present invention is to provide a resin composition with reduced coloring.

As a result of intensive investigation to achieve the aforesaid objects, the present inventors have found that the aforesaid problems can be overcome by incorporating, in a resin or the like, a molten mixture obtained by melt mixing a mixture containing a solvent and a nano natural polymer having a specific average fiber diameter and a specific average fiber length with at least an aqueous polyolefin resin dispersion containing a polyolefin and water.

#### Means for solving the Problems

Described specifically, the molten mixture of the present invention is a molten mixture composed of a mixture containing a cellulose nanofiber and a solvent and 0.05 to 1 part by mass, based on 1 part by mass of the cellulose nanofiber, of an aqueous polyolefin resin dispersion.

#### Advantageous Effect of the Invention

The present invention provides a molten mixture containing a nano natural polymer which has good interfacial

adhesion with a resin and at the same time, has high dispersibility in the resin; and a resin composition whose molded or formed product is capable of having excellent tensile stress at yield and Charpy impact strength while maintaining sufficient mechanical properties. In addition, the present invention provides a molten mixture capable of reducing the coloring of the resin composition itself and a resin composition with reduced coloring.

Brief Description of the Drawings

FIG. 1 is a schematic view of a manufacturing (defibration treatment) apparatus of CNF.
FIG. 2 is a schematic view of another manufacturing (defibration treatment) apparatus of CNF.
FIG. 3 is a partially enlarged schematic view of the manufacturing (defibration treatment) apparatus of CNF shown in FIG. 2.

Mode for carrying out the Invention

The present invention will hereinafter be described more specifically based on Examples. It is to be noted that the present invention is not limited to the following Examples.

(Definition of terms)

In the present invention, the term "molten mixture" is that obtained by applying heat to a mixture composed at least of a nano natural polymer and an aqueous polyolefin resin dispersion and cooling the resulting mixture.

In the present invention, the term "composition" means a composition obtained by melt mixing a molten mixture and a polyolefin or a molten mixture, a polyolefin, and a modified polyolefin.

[(A) Nano natural polymer]

The nano natural polymer to be used in the present invention is a natural polymer nanofiber which is a fibrous material with a diameter of 1 nm to less than 1000 nm and a length of 100 times or more the diameter, or a natural polymer nanocrystal which is an ultrafine crystal having a rod shape or spindle shape with a diameter of 10 to 50 nm and a length of 100 to 500 nm or less.

Examples of the natural polymer to be used in the present invention include, not particularly limited to, polysaccharides such as cellulose, chitin, and chitosan, proteins such as collagen and gelatin, polylactic acid, and polycaprolactam.

In the present invention, a nano natural polymer having a crystallinity index range of 50% or more is preferably used, because when a nano natural polymer having a low crystallinity index is used, the ability of the nano natural polymer to be loaded on a resin deteriorates due to a reduction in the specific surface area of it and the ability and workability (fluidity of the resin and shape retention of a resin molded or formed product) of the resin molded formed product deteriorate due to reduction in strength, elasticity, and thixotropic properties. In addition, the nano natural polymer having a lower crystallinity index is more perishable.

In the present invention, a nano natural polymer having an average polymerization degree range of 400 to 900 is preferably used, because a nano natural polymer having an average polymerization degree higher than 900 is inferior in the ability to be loaded on a resin due to a reduction in the specific surface area of the nano natural polymer, leading to a poor resin reinforcing effect. When the nano natural polymer has an average polymerization degree less than 400, the number of steps necessary for defibration increases, leading to an increase in the production cost of the nano natural polymer.

Next, a process of preparing an aqueous solution of a cellulose nanofiber or a cellulose nanocrystal which uses cellulose as a natural polymer will be described. In the present invention, examples of CNF include CNFs derived from polysaccharides including natural plants such as wood fibers, hardwood, softwood, bamboo fibers, sugarcane fibers, seed hair fibers, leaf fibers, and seaweed. These CNFs may be used either singly or as a mixture of two or more. It may be a product obtained from a crop residue derived from plant leaves, flowers, stems, roots, hulls, and the like such as bagasse, rice straws, tea grounds, and pomace of fruit juice. These CNFs may be used either singly or as a mixture of two or more. As the polysaccharide, pulp having an $\alpha$-cellulose content of 60% to 90 mass% is preferred. When pulp has a purity as high as an $\alpha$-cellulose content of 60 mass% or more, the fiber diameter and fiber length can be adjusted easily, making it possible to suppress the entanglement of fibers; and compared with the use of pulp having an $\alpha$-cellulose content less than 60 mass%, the heat stability during melting is higher, deterioration in impact strength is not caused, a coloring suppressing effect is superior, and thus, the advantageous effects of the present invention are more excellent. When pulp having the content of

99 mass% or more is used, on the other hand, it becomes difficult to defibrate the fiber into a nano level.

The CNF in the present invention is obtained as a CNF dispersion (which may also be called "water-containing CNF", hereinafter) by carrying out the following defibration treatment. The defibration treatment is performed using the aqueous counter collision method (which may also be called "ACC method", hereinafter) shown in FIG. 1. It is a method of introducing pulp suspended in water into two nozzles (108a and 108b in FIG. 1) facing with each other in a chamber (107 in Fig. 1) and injecting the resulting pulp suspensions from these nozzles toward one point and causing them to collide. The apparatus shown in FIG. 1 is a liquid circulation type. It is equipped with a tank (109 in FIG. 1), a plunger (110 in FIG. 1), two nozzles facing with each other (108a and 108b in FIG. 1), and if necessary, a heat exchanger (111 in FIG. 1). Fine particles dispersed in water are introduced into these two nozzles, injected under high pressure from the nozzles (108a and 108b in FIG. 1) that face with each other, and are subjected to counter collision in water.

Before the aforesaid defibration treatment, a pretreatment apparatus may be used to carry out defibration treatment (FIG. 2 and FIG. 3). As another defibration treatment, such a pretreatment apparatus may also be used. The defibration treatment using the aforesaid pretreatment apparatus is carried out by causing high-pressure water of about 50 to 400 MPa to collide with a polysaccharide obtained as a 0.5 to 10 mass% aqueous mixture. This treatment is carried out using, for example, the production apparatus 1 shown in FIG. 2. The production apparatus 1 is equipped with a polysaccharide slurry supply path 3, which is a first liquid medium supply path placed to enable supply of a polysaccharide slurry to a chamber 2 and a second liquid medium supply path 4 that circulates non-polysaccharide slurry, for example, water via the chamber 2. The apparatus has, in the chamber 2, an orifice injection unit 5 that performs orifice injection of the non-polysaccharide slurry of the second liquid medium supply path 4 in a direction intersecting a polysaccharide slurry supply direction from the polysaccharide slurry supply path 3. The polysaccharide slurry supply path 3 enables the polysaccharide slurry to circulate via the chamber 2.

The polysaccharide slurry supply path 3 and the second liquid medium supply path 4 have an intersection unit 6 of them in the chamber 2.

The polysaccharide slurry supply path 3 is a polysaccharide slurry supply unit and has a tank 7 for storing polysaccharide slurry therein and a pump 8 in a circulation path 9, while the second liquid medium supply path 4 has a tank 10, a pump 11, a heat exchanger 12, and a plunger 13 in the liquid medium supply path 4 which is a circulation path.

It is to be noted that the term "non-polysaccharide slurry" comprehensively means, for example, water which is initially stored in the tank 10 and then comes to contain, at a concentration according to the degree of operation, the nanofibrillated polysaccharide which has passed through the intersection unit 6 and has been stored in the tank 10 with the activation of the cellulose nanofiber production apparatus 1.

As shown in FIG. 3, the circulation path 9 of the polysaccharide slurry supply path 3 is placed in a mode of penetrating the chamber 2 and an orifice injection port 15 of the orifice injection unit 5, which is connected to the plunger 13 of the second liquid medium supply path 4 to enable orifice injection of the non-polysaccharide slurry in a direction crossing the circulation path and thereby penetrate the slurry through the circulation path 9, is opened inside the chamber 2. A discharge port 16 of the chamber 2 is placed at a position facing with the orifice injection port 15 of the chamber 2 and the circulation path of the second liquid medium supply path 4 is connected to this discharge port 16 of the chamber 2 to constitute the second liquid medium supply path 4.

On the other hand, the circulation path 9 of the polysaccharide slurry supply path 3 is formed using, for example, a vinyl hose, a rubber hose, or an aluminum pipe and a unidirectional valve 17 that opens only in the direction of the chamber 2 is attached to the entry side of the circulation path 9 to the chamber 2. Further, a unidirectional valve 18 that is opened only in a discharge direction from the chamber 2 is attached to the exit side of the circulation path 9 from the chamber 2. In addition, an air suction valve 19 is attached to the circulation path 9 between the chamber 2 and the unidirectional valve 18 and this air suction valve 19 is opened only in a direction of sucking air into the circulation path 9 from the outside.

Cellulose nanofibers are produced in the following manner by using the aforesaid cellulose nanofiber production apparatus.

Non-polysaccharide slurry is circulated through the second liquid medium supply path 4 via the chamber 2. Described specifically, non-polysaccharide slurry in the tank 10 is caused to pass the heat exchanger 12 and the plunger 13 by means of the pump 11 to circulate through the liquid medium supply path 4. On the other hand, polysaccharide slurry is circulated through the polysaccharide slurry supply path 3 via the chamber 2. Described specifically, polysaccharide slurry in the tank 7 is circulated, by means of the pump 8, through the circulation path 9 formed using a vinyl hose, a rubber hose, or the like.

The orifice injection of the non-polysaccharide slurry that circulates through the second liquid medium supply path 4 is performed to the polysaccharide slurry that circulates through the polysaccharide slurry supply path 3 and is distributed in the chamber 2. Described specifically, high-pressure water is supplied from the plunger 13 to the orifice injection port 14 connected to the plunger 13 and is then subjected to orifice injection to the circulation path 9 from the orifice injection port 15 at a high pressure of about 50 to 400 MPa.

As a result, the non-polysaccharide slurry that has passed through through-holes 27a and 27b formed in advance in the circulation path 9 formed using, for example, a vinyl hose, a rubber hose, or an aluminum pipe and has passed inside

the circulation path 9 in a direction intersecting the circulation path 9 is discharged toward the discharge port 16 of the chamber 2 while involving the polysaccharide slurry that circulates through the circulation path 9 and is distributed in the second liquid medium supply path 4. The non-polysaccharide slurry thus circulates again through the second liquid medium supply path 4.

During a procedure in which the aforesaid process is repeated, the polysaccharide in the polysaccharide slurry that circulates through the polysaccharide slurry supply path 3 and is distributed in the chamber 2 and in the non-polysaccharide slurry that circulates through the second liquid medium supply path 4 are gradually defibrated to obtain a CNF dispersion for intended use having high defibration degree uniformity.

The defibration degree of pulp fibers into CNF can be evaluated by the viscosity value of the CNF dispersion. Described specifically, since the fiber length of CNF contained in the CNF dispersion having an increased defibration degree is short, the dispersion has a low viscosity value. Therefore, the CNF dispersion having a high defibration degree has a low viscosity. In a CNF dispersion having a defibration degree higher than the aforesaid one, on the other hand, the fiber length of CNF contained in such a CNF dispersion is long so that the dispersion has a higher viscosity value. Therefore, it has a low defibration degree compared with the aforesaid CNF dispersion.

In addition, since a ratio (aspect ratio) of fiber length to fiber diameter after defibration differs depending on pulp fibers, CNF dispersions have respectively different viscosity values.

Further, for example, by using different kinds of pulp fibers in combination or adjusting the aforesaid defibration degree, the viscosity of a 1 wt% aqueous CNF dispersion can be adjusted to a range of about 300 to 10000 mPa s.

The CNF obtained in the aforesaid manner is free from a structural change of a cellulose molecule because nanofibrillation is achieved by cleaving only the mutual action between natural cellulose fibers and it has a structural formula represented by the following chemical formula 1. In other words, the CNF to be used in the present invention has 6 hydroxyl groups in the cellobiose unit in the chemical formula 1, meaning that it is not chemically modified. This can be confirmed by using FT-IR and comparing the IR spectrum of cellulose with and that of CNF to be used in the present invention. In addition, cellulose fibers can be ground into even an average fiber length of 10 μm by the present ACC method and as a result, CNF having an average thickness of 3 to 200 nm and average length of 0.1 μm or more can be obtained.

The cellulose nanocrystal in the present invention can be obtained by subjecting the cellulose fiber obtained by the ACC method to chemical treatment such as acid hydrolysis with an acid such as sulfuric acid or subjecting pulp, before fibrillation treatment by the ACC method, to chemical treatment such as acid hydrolysis with sulfuric acid or the like, followed by fibrillation treatment by the ACC method. The cellulose nanocrystal is also called "cellulose nanowhisker".

The average thickness and the average fiber length are determined by observing and measuring CNF using a scanning electron microscope (SEM), a transmission electron microscope (TEM), a scanning probe microscope (SPM), or the like selected as needed, selecting at least 20 fibers from the microphotograph thus obtained, and averaging the values. In the counter collision treatment, on the other hand, energy applied is far smaller (estimated value: 1/300 or less) than covalent-bond dissociation energy so that a reduction in the cellulose polymerization degree is unlikely to occur. The cellulose nanofiber obtained by the present ACC method has both a hydrophilic site and a hydrophobic site and exhibits amphiphilicity.

[Chemical formula 1]

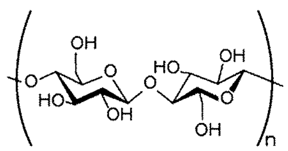

It is to be noted that in the present invention, even cellulose nanofibers obtained by another known cellulose nanofiber manufacturing method including a chemical treatment method such as treatment with a TEMPO oxidation catalyst, phosphorylation treatment, ozone treatment, enzymatic treatment, treatment with maleic acid, hydrophobicity modification with an alkenylsuccinic anhydride, hydrophobicity modification with an alkyl ketene dimer, or hydrophobicity modification by acetylation; and a physical method that thins cellulose-based fibers by wet grinding making use of the mechanical action of a grinder (a stone mill type grinder), a disc type refiner, a conical refiner, or the like can be used for a CNF dispersion in the present invention. In addition, cellulose nanofibers obtained by a method using chemical treatment and physical treatment in combination can also be used for a CNF dispersion.

The CNF dispersion thus obtained has usually a CNF concentration range of 0.1 to 10%.

Then, the CNF dispersion thus obtained is desolvated to adjust a CNF solid concentration to a range of 20 to 50%.

When the dispersion has a CNF solid concentration less than 20%, cellulose nanofibers are likely to form an aggregate with each other during the production of a molten mixture and the aggregate becomes a cause for deteriorating

the dispersibility in the resin. Further, a large amount of the solvent causes a thermal energy loss during the production of a molten mixture.

The dispersion having a solid concentration more than 50%, on the other hand, is not preferred because the CNF has already aggregated partially with each other and the aggregate cannot be re-dispersed during the production of a molten mixture.

The solvent should contain at least water and even the dispersion containing another solvent such as organic solvent as well as water can be used without particular limitation.

[(B) (Aqueous polyolefin resin dispersion)]

The aqueous polyolefin resin dispersion is a dispersion of a polyolefin in water and can be prepared by a method of dispersing in water a kneaded material composed of the polyolefin and a water soluble polymer such as polyvinyl alcohol, a method of melt kneading the polyolefin with a carboxyl-containing polyolefin, supplying the kneaded material in hot water containing a basic material, and applying a shear force to obtain a dispersion, or the like.

The polyolefin used here is a crystalline or non-crystalline olefin-based polymer. It may contain a diene.

Examples of the olefin constituting the polymer include, in addition to ethylene, propylene, and $\alpha$-olefins such as, butene-1, pentene-1, hexene-1, and octene-1. They may be used either singly or in combination of two or more.

Examples of the diene include isoprene, butadiene, dicyclopentadiene, pentadiene-1,4, 2-methyl-pentadiene-1,4, hexadiene-1,4, divinylbenzene, methylidene norbornene, and ethylidene norbornene. They may be used either singly or in combination of two or more. Further, styrene, vinyl acetate, acrylic acid, an acrylate ester such as methyl acrylate, methacrylic acid, and a methacrylate ester such as methyl methacrylate can also be used.

Specific examples of the polyolefin include polyethylene, polypropylene, ethylene·propylene copolymer, ethylene·butene-1 copolymer, propylene-butene-1 copolymer, ethylene·propylene. hexadiene-1,4 copolymer, ethylene·propylene·dicyclopentadiene copolymer, ethylene·propylene-5-ethylidene-2-norbornene copolymer, ethylene·propylene-5-vinyl-2-norbornene copolymer, ethylene·butene. 1,5-ethylidene·2-norbornene copolymer, ethylene·butene-1·dicyclopentadiene copolymer, ethylene·dicyclopentadiene copolymer, ethylene-vinyl acetate copolymer, ethylene-methyl methacrylate copolymer, ethylene·acrylic acid copolymer, ethylene-methacrylic acid copolymer, and ethylene butadiene copolymer.

The water soluble polymer to be mixed with the aforesaid polyolefin is a saponified polyvinyl alcohol or the like and is not particularly limited. The carboxyl-containing polyolefin is that obtained by reacting the aforesaid polyolefin with maleic anhydride, maleic acid, fumaric acid, or the like, or by copolymerizing it with acrylic acid or methacrylic acid.

When any of these mixtures is dispersed in water to obtain a dispersion, the mixture may contain an anionic surfactant and/or nonionic surfactant.

The aqueous polyolefin resin dispersion thus prepared has usually a solid concentration of 10 to 70% and solid content particles have an average particle size of 0.01 to 20 $\mu$m. It is to be noted that the average particle size can be measured by either a Coulter counter method or a Microtrac method.

[(B-1) (Silane coupling agent)]

The molten mixture of the present invention may further contain a silane coupling agent. This silane coupling agent is used for improving the adhesion between the cellulose nanofibers and the resin used in the composition.

The silane coupling agent is an organic silicon compound having, in one molecule thereof, both a hydrolyzable group and an organic functional group.

The term "hydrolysable group" means a substituent that may directly bond to a silicon atom to form a siloxane bond by a hydrolyzation reaction and/or condensation reaction. In general, it represents a hydrogen atom or an alkyl group having 1 or more and 22 or less carbon atoms. The alkyl group may be any of linear, branched, and cyclic ones. When the silane coupling agent has, in the molecule thereof, a plurality of hydrolyzable groups, the substituents may be either the same or different from each other.

In general, the organic functional group is preferably at least one selected from a vinyl group, an epoxy group, a styryl group, a methacrylic group, an acrylic group, an amino group, an ureido group, a mercapto group, a sulfide group, an isocyanate group, an isocyanurate group, and the like. When the silane coupling agent has, in the molecule thereof, a plurality of the organic functional groups, the organic functional groups may be the same or different from each other.

Examples of such a silane coupling agent include vinyltrimethoxysilane, vinyltriethoxysilane, 2-(3,4-epoxycyclohexyl)ethyltrimethoxysilane, 3-glycidoxypropylmethyldimethoxysilane, 3-glycidoxypropyltrimethoxysilane, 3- glycidoxypropylmethyldimethoxysilane, 3-glycidoxypropyltrimethoxysilane, 3- glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane, N-(vinylbenzyl)-2-aminoethyl-3-aminopropyltrimethoxysilane hydrochloride, 3-ureidopropyltrialkoxysilane, 3-isocyanatopropyltriethoxysilane, tris(-trimethoxysilylpropyl)isocyanurate, 3-mercaptopropylmethyldimethoxysilane, and 3-mercaptopropyltrimethoxysilane.

[(B-2) (Modified polyolefin)]

The molten mixture of the present invention may further contain a modified polyolefin. The modified polyolefin is used for improving the dispersibility between the cellulose nanofiber and another component, and the like. It is to be noted that the molten mixture of the present invention may contain both the silane coupling agent (B-1) and the modified polyolefin (B-2).

The modified polyolefin is not particularly limited as far as it is a polyolefin modified to have polarity. Examples include polypropylenes modified with carboxylic acid (anhydride), epoxide, oxazoline, isocyanate, carbodiimide, or the like. Preferred examples include maleic anhydride-modified polypropylene, carbodiimide-modified polypropylene, and epoxy-modified polypropylene.

A modified polyolefin having a weight average molecular weight of 500,000 or less, preferably 300,000 or less, more preferably 200,000 or less may be used.

((D) Molten mixture)

The molten mixture of the present invention contains, based on 1 part by mass of the cellulose nanofiber (A), 0.05 to 1 part by mass, preferably 0.1 part by mass to 0.5 part by mass, more preferably 0.2 part by mass to 0.3 part by mass in terms of a solid content of the aqueous polyolefin resin dispersion (B). The aqueous polyolefin resin dispersion has no effect on the dispersibility of the cellulose nanofiber when added in an amount less than 0.05 part by mass, while it acts as a lubricant, does not apply shear force, and fails to remove a water content from the molten mixture when added in an amount more than 1 part by mass.

When the molten mixture containing the silane coupling agent (B-1) is produced, the silane coupling agent (B-1) may be incorporated in an amount of 1.8 parts by mass or more and 13.2 parts by mass or less, based on 100 parts by mass of the molten mixture composed of the nano natural polymer (A) and the aqueous polyolefin resin dispersion (B).

When the molten mixture containing the modified polyolefin (B-2) is produced, the modified polyolefin (B-2) may be incorporated in an amount of 1 part by mass or more and 30 parts by mass or less based on 100 parts by mass of the molten mixture composed of the nano natural polymer (A) and the aqueous polyolefin resin dispersion (B).

In addition, when the molten mixture containing the silane coupling agent (B-1) and the modified polyolefin (B-2) is produced, the silane coupling agent (B-1) and the modified polyolefin (B-2) may be incorporated in an amount of 1.8 parts by mass or more and 13.2 parts by mass or less and in an amount of 1 part by mass or more and 30 parts by mass or less, respectively, based on 100 parts by mass of the molten mixture composed of the nano natural polymer (A) and the aqueous polyolefin resin dispersion (B).

(Molten mixture production method)

The molten mixture of the present invention can be obtained by mixing a mixture containing the cellulose nanofiber (A) and the solvent and the aqueous polyolefin resin dispersion (B) by means of a mixer or the like and then, heating, shearing, and desolvating the resulting mixture by means of a twin screw extruder, a pressure kneader, or the like.

The method of producing a molten mixture includes a mixing step, that is, a step of mixing a mixture containing the cellulose nanofiber (A) and the solvent with the aqueous polyolefin resin dispersion (B) to obtain a mixture. The aqueous polyolefin resin dispersion is used because in both the components (A) and (B), a component insoluble in water is dispersed in water; and during the production of a polyolefin-containing composition, the presence of an olefin in the molten mixture is useful for improving the dispersibility of the cellulose nanofiber and the resin. As an apparatus to be used for mixing, a high-speed mixer typified by a tumbler mixer, a Henschell mixer, a ribbon blender, a super mixer, or the like may be used.

Then, a step of heating the resulting mixture, applying a shear force thereto, removing the water content from the mixture, and powderizing the residue is carried out.

The water content of the resulting molten mixture may be adjusted to 5.0% or less, preferably 3.0% or less, more preferably 1.0% or less, because the molten mixture having a water content higher than 5.0% may deteriorate the dispersibility of the nano natural polymer when the molten mixture (D) is mixed with (C) a resin which will be described later.

A powderizing means is not particularly limited as far as it can heat and apply a shear force to the mixture. Described specifically, examples of it include a single screw extruder, a twin screw extruder, a twin screw kneader, a kneader, a Banbury mixer, a reciprocating kneader, and a roll kneader. Use of a continuous extruder such as twin screw

kneader here is particularly preferred in terms of efficiency because steps until a step of kneading in the resin can be conducted continuously. Degassing equipment or the like may be used to remove a water content and another volatile matter which may be generated during the powderizing step. With regard to the heating conditions to be applied to the nano natural polymer, heating conditions such as heating time are not particularly limited.

At this time, by changing a mixing ratio of the cellulose nanofiber and the aqueous polyolefin resin dispersion, the molten mixture can be obtained in powdery form or in pellet form. Use of an extruder equipped with a T die allows to obtain a molten mixture in sheet form.

[(C) Resin]

Examples of the component of the resin (C) to be used in the composition of the present invention include (C-1) a thermoplastic resin, (C-2) a thermosetting resin, and (C-3) a rubber.

(C-1) Thermoplastic resin

The term "thermoplastic resin" as used herein means a resin to be melt-molded or melt-formed by heating. Specific examples include at least one selected from each of the following groups: general-purpose plastics such as polyethylene (HDPE, MDPE, LDPE, and LLDPE), po(vinyl chloride), polypropylene, polystyrene, ABS resin, AS resin (polystyrene-acrylonitrile copolymer), and methacrylic resin, general-purpose engineering plastics such as polyamide, polyacetal, polycarbonate, modified polyphenylene ether, polyethylene terephthalate, and ultrahigh molecular polyethylene, super engineering plastics such as polysulfone, polyether sulfone, polyphenylene sulfide, polyarylate, polyamide-imide, polyetherimide, polyether ketone, polyimide, liquid crystal polymer, and fluorine resin, biodegradable plastics such as polylactic acid, polycaprolactone, and polybutylene succinate. In addition, a resin which has such a characteristic as being soluble in water or having a liquid form at normal temperatures and is usable as a liquid, such as PVA or polyethylene glycol, can also be used. The aforesaid thermoplastic resins may be used either singly or in combination of two or more.

(C-2) Thermosetting resin

When in the resin composition of the present invention, a (C-2) thermosetting resin is used as the matrix component (C), the thermosetting resin is present as a uniform dispersion with the cellulose nanofiber in the resin composition of the present invention. The kind of the thermosetting resin is not particularly limited. Examples of the thermosetting resin include an epoxy resin, a phenolic resin, a urea resin, a melamine resin, polyurethane, an unsaturated polyester resin, a silicone resin, a polyimide resin, and a diallyl phthalate resin. A resin which has such a characteristic as being soluble in water or having a liquid form at normal temperatures and is usable as a liquid, such as a dicyclopentadiene resin, can also be used. The aforesaid thermosetting resins may be used either singly or in combination of two or more.

(C-3) Rubber

Examples of the rubber to be used here include natural rubber, chloroprene rubber, ethylene-propylene-nonconjugated diene copolymer rubber, ethylene-butene-1 copolymer rubber, ethylene-hexene copolymer rubber, ethylene-octene copolymer rubber, polybutadiene, styrene-butadiene block copolymer rubber, partially hydrogenated styrene-butadiene-styrene block copolymer rubber, styrene-isoprene block copolymer rubber, partially hydrogenated styrene-isoprene block copolymer rubber, polyurethane rubber, styrene graft-ethylene-propylene-nonconjugated diene copolymer rubber, styrene-graft-ethylene-propylene copolymer rubber, styrene/acrylonitrile-graft-ethylene-propylene-nonconjugated diene copolymer rubber, styrene/acrylonitrile-graft-ethylene-propylene copolymer rubber, chlorosulfonated polyethylene rubber, silicone rubber, ethylene-vinyl acetate rubber, epichlorohydrin rubber, and polysulfide rubber. These rubbers may be used either singly or in combination of two or more.

Further, a polymer alloy obtained by incorporating these rubbers in the aforesaid resin (C-1) or (C-2) may be used. A latex rubber which is a rubber usable as a liquid may also be used. The rubber content in the polymer alloy is preferably 50 mass% or less from the standpoint of adding a new characteristic to the characteristics of the resin.

(Composition)

When the composition of the present invention is composed of the molten mixture component (D) and the resin component (C), the amount of the component (D) is 0.5 to 60 mass% and that of the component (C) is 40 to 99.5 mass%, wherein (D) + (C) = 100 mass%.

When the component (D) is less than 0.5 mass%, it is difficult to distinguish the strength of the resulting composition from that of the single resin component, while when it is more than 60%, the melt viscosity increases and the

resulting resin composition has inferior moldability or formability.

When the component (C) is less than 40 mass%, moldability or formability is inferior and a composite cannot be obtained in the kneading step of the composition, while when the component is more than 99.5%, it becomes difficult to distinguish the resulting resin from the single resin component.

When the composition of the present invention is composed of the molten mixture (D), the resin (C), and the modified polypropylene (B-2), the component (D) is 0.5 to 60 mass%, the component (C) is 35 to 99 mass%, and the component (B-2) is 0.5 to 5 mass%, wherein (D) + (C) + (B-2) = 100 mass%.

When the component (B-2) is less than 0.5%, the modified polypropylene (B-2) does not exhibit its effect, while the amount more than 5% may cause a deterioration in physical property values.

(Method of producing composition)

The method of producing the composition of the present invention includes a step of forming a composite while melt kneading the molten mixture (D) and the resin (C). This also applies to the case where the composition contains the modified polypropylene (B-2).

As a kneading apparatus, known kneading apparatuses such as single screw extruder, twin screw extruder, twin screw kneader, kneader, Bunbury mixture, reciprocating kneader, and roll kneader can be used.

In the production of the composition of the present invention, the temperature during melt kneading is set as needed depending on the melting temperature of the component (C) and it may be set, for example, at a temperature higher by 20 to 30°C than the melting point of the component (C). Temperatures lower than the melting point make it substantially impossible to produce the composition because the resin to be kneaded does not melt. When temperatures are higher than the aforesaid range, on the other hand, make it difficult to carry out pelletization due to an excessive increase in the fluidity of the component (C); or they may not only cause the cleavage of a molecular chain, oxidative deterioration, change in quality, or the like due to the thermal damage of the nano natural polymer (A) and thereby deteriorate mechanical physical properties but also lead to the generation of an offensive odor or discoloration.

For the use of the thermosetting resin (C-2) as the component (C), measures must be taken to prevent occurrence of thermosetting during the aforesaid melt kneading without adding a curing catalyst or a curing agent during the melt kneading.

[Additive]

The molten mixture or composition of the present invention may contain another resin and an additive, during mixing, molding or forming, or production insofar as its physical properties are not impaired or for the purpose of imparting it with functionality such as impact resistance and energy absorption. Examples include various thermoplastic elastomers such as styrene-based, olefin-based, vinyl chloride-based, urethane-based, ester-based, amide-based, 1,2-BR-based and fluorine-based ones, compatibilizers, surfactants, starches, polysaccharides, gelatin, glues, natural proteins, tannins, zeolites, ceramics, metallic powders, pigments, dyestuffs, fortifiers, fillers, heat resistant agents, oxidation inhibitors, heat stabilizers, weather resistant agents, lubricants, mold release agents, nucleating agents, coloring agents, perfumes, leveling agents, plasticizers, fluidity improving agents, conducting agents, antistatic agents, ultraviolet absorbers, ultraviolet dispersants, deodorants, and metallic soaps.

With regard to the content of an arbitrary additive, it may be incorporated as needed without damaging the advantageous effect of the present invention and for example, in the molten mixture, the content in the molten mixture is desirably 50 mass% or less, while in the composition, the content in the composition is about 15 mass% or less, more preferably about 10 mass% or less.

Examples of the thermoplastic elastomer in the present invention include mixtures of a polymer composed of a hard segment and a polymer composed of a soft segment and copolymers of a polymer composed of a hard segment and a polymer composed of a soft segment.

Examples of the hard segment of the styrene-based thermoplastic elastomer include segments composed of polystyrene. Examples of the soft segment include segments composed of polybutadiene, hydrogenated polybutadiene, polyisoprene, or hydrogenated polyisoprene. More specific examples include block copolymers such as styrene-butadiene-styrene (SBS) copolymers, styrene-isoprene-styrene (SIS) copolymers, styrene-ethylenebutylene-styrene (SEBS) copolymers, styrene-ethylene-propylene-styrene (SEPS) copolymers, and styrene-butadiene-butylene-styrene (SBBS) copolymers. They may be used either singly or as a mixture of two or more.

Examples of the hard segment of the polyolefin-based elastomer include segments composed of polypropylene, propylene-ethylene copolymer, polyethylene, or the like. Examples of the soft segment include polyethylene and segments obtained by copolymerizing ethylene with a small amount of a diene component. More specific examples include ethylene-butene copolymers, EPR

(ethylene-propylene copolymers), modified ethylene-butene copolymers, EEA (ethylene-ethyl acrylate copolymers), modified EEA, modified EPR, modified EPDM (ethylene-propylene-diene tertiary copolymers), ionomers, α-olefin copolymers, modified IR (isoprene rubber), modified SEBS (styrene-ethylenebutylene-styrene copolymers), halogenated isobutylene-paramethylstyrene copolymers, modified ethylene-acrylic acid, ethylene-vinyl acetate copolymers, acid-modified products thereof, and mixtures containing them as a main component. They may be used either singly or as a mixture of two or more.

Examples of the polyester-based thermoplastic elastomer include those obtained by copolymerizing a polyester structure as a hard segment with polyether, polyester, or the like as a soft segment.

Examples of the hard segment of the urethane-based elastomer include polyurethane obtained by reacting a diisocyanate with a short-chain diol or the like serving as a chain extender. Those of the soft segment include polymer diols such as polyester diols, polyether diols, and polycarbonate diols.

Examples of the compatibilizer in the present invention include compounds composed of a polar group having high affinity for cellulose and a hydrophobic group having high affinity for the resin. More specific examples of the polar group include maleic anhydride, maleic acid, and glycidyl methacrylate, while those of the hydrophobic group include polypropylene and polyethylene.

The metallic soap in the present invention is not particularly limited and examples of it include metallic salts of an aliphatic carboxylic acid, metallic salts of an alicyclic carboxylic acid, and metallic salts of an aromatic carboxylic acid. They are preferably metallic salts of an aliphatic carboxylic acid having 35 or less carbon atoms, more preferably metallic salts of a monocarboxylic acid having 35 or less carbon atoms, still more preferably metallic salts of a monocarboxylic acid having 10 to 32 carbon atoms. Examples of the metallic salt include salts of an alkali metal, alkaline earth metal, zinc, or the like, with zinc salts being most preferred among them.

The nucleating agent in the present invention is not particularly limited and from the standpoint of impact resistance and moldability or formability of the resin composition, preferred is at least one selected from the group consisting of compounds having, in the molecule thereof, a hydroxyl group and an amide group, metallic salts of phenylphosphonic acid, phthalocyanine, metallic salts of a phosphoric acid ester, metallic salts of an aromatic sulfonic acid dialkyl ester, metallic salts of a resin acid, aromatic carboxylic acid amides, resin acid amides, carbohydrazides, N-substituted ureas, salts of a melamine compound, uracil, and talc.

Examples of the surfactant in the present invention include the following ones. Examples of ionic surfactants include cationic surfactants, amphoteric surfactants and anionic surfactants. Examples of the cationic surfactants include alkylamine salts and quaternary ammonium salts. Examples of the amphoteric surfactants include alkyl betaine-based surfactants and amine oxide-based surfactants. Examples of the anionic surfactants include alkylbenzene sulfonates such as dodecylbenzene sulfonic acid, aromatic sulfonic acid-based surfactants such as dodecylphenyl ether sulfonate, monosoap-based anionic surfactants, ether sulfate-based surfactants, phosphate-based surfactants, and carboxylic acid-based surfactants.

Examples of the nonionic surfactants include sugar ester-based surfactants such as sorbitan fatty acid esters and polyoxyethylene sorbitan fatty acid esters, fatty acid ester-based surfactants such as polyoxyethylene resin acid esters and polyoxyethylene fatty acid diethyl, ether-based surfactants such as polyoxyethylene alkyl ethers, polyoxyethylene alkyl phenyl ethers, and polyoxyethylene-polypropylene glycols, and aromatic nonionic surfactants such as polyoxyalkylene octyl phenyl ethers, polyoxyalkylene nonyl phenyl ethers, polyoxyalkyl dibutyl phenyl ethers, polyoxyalkyl styryl phenyl ethers, polyoxyalkyl benzyl phenyl ethers, polyoxyalkyl bisphenyl ethers, and polyoxyalkyl cumyl phenyl ethers. In the above, the alkyl may be selected from alkyls having 1 to 20 carbon atoms. These surfactants may be used either singly or as a mixture of two or more.

<Molding or forming>

A molded or formed product is obtained by molding or forming the composition of the present invention, obtained in the aforesaid manner, by various molding or forming methods. Since a molding or forming method differs depending on whether the composition is a thermoplastic resin composition, a thermosetting resin composition, or a rubber composition, the product may be obtained by using a method selected from the following molding or forming methods as needed.

For producing a plate-shaped product from the composition of the present invention, it is the common practice to use extrusion forming, but flat pressing may also be used. In addition, contour extrusion, blow molding, compression molding, vacuum forming, injection molding, and the like can be used. For producing a film-shaped product, solution casting as well as melt extrusion can be used. When a melt formation method is used, examples of it include blown film formation, casting, extrusion lamination, calendaring, sheet forming, fiber forming, blow molding, injection molding, rotational molding, and coating. When a resin used is cured by active energy rays, a molded or formed product can be produced by using various curing methods using active energy rays. In particular, when a cellulose nanofiber is added to a liquid thermoplastic resin, examples of the method include a molding or forming method in which heat and pressure are applied to a pre-impregnated molding or forming material by a press or an autoclave. Additional examples include RTM (Resin Transfer Molding), VaRTM (Vacuum assist Resin Transfer Molding), FW (Filament Winding), laminate molding,

and hand lay-up.

Examples

The present invention will hereinafter be described more specifically by the following Examples, but the present invention is not limited by these Examples. The average polymerization degree described in Examples and Comparative Examples was measured using the following measuring method.

(Measurement of polymerization degree of CNF)

A CNF solid content (0.15 g) was dissolved in 30 mL of a 0.5M copper ethylenediamine solution and the viscosity $\eta$ of the CNF·copper ethylenediamine solution was measured using a Canon Fenceke kinematic viscosity tube. With the viscosity of the 0.5M copper ethylenediamine solution as $\eta 0$, an ultimate viscosity $[\eta]$ was determined from the following Schulz-Blaschke formula and a polymerization degree DP was calculated based on the following Mark-Houwink-Sakurada formula.

$$\text{Specific viscosity } \eta sp = \eta/\eta 0-1$$

$$\text{Intrinsic viscosity } [\eta] = \eta sp/\{c(1 + A \times \eta sp)\}$$

wherein, $\eta 0$ is the viscosity of the 0.5M copper ethylenediamine solution, c is the CNF concentration (g/mL), and A is an intrinsic value determined depending on the kind of the solution and A = 0.28 in the case of the 0.5M copper ethylenediamine solution.

$$\text{Polymerization degree DP} = [\eta]/Ka$$

wherein, K and a are both intrinsic values determined by the kind of the polymer and the solvent, and K = 0.57 and a = 1 in the case of a cellulose dissolved in the copper ethylenediamine solution.

(Example 1)

Using Mechano Hybrid (Nippon Coke & Engineering Co., Ltd., model: MMH-75B/I), a CNF water mixture (CNF solid content: 50%, water content: 50%, average polymerization degree: 810) derived from softwood pulp and an aqueous polyolefin resin dispersion (product of BYK JAPAN, HORDAMAR PE02, polyethylene, nonvolatile content: 40%) were mixed at a ratio of 9:1 (1:0.1) to obtain a mixture.

Then, the mixture thus obtained was subjected to a twin screw extruder (Japan Steel Works, Ltd., model: TEX25αIII) to obtain a molten mixture. The screw diameter was set at Φ25 mm and the average cylinder temperature was set at 121°C.

(Example 2)

In a manner similar to that of Example 1 except that a CNF water mixture (CNF solid content: 30%, water content: 70%, average polymerization degree: 810) derived from softwood pulp and an aqueous polyolefin resin dispersion (product of Mitsui Chemicals, CHEMIPEARL A100, PE-based elastomer, solid concentration: 40%, particle size: 4 μm (Coulter counter method), viscosity: 5000 mPa·s (Brookfield type viscometer 6 rpm))) were mixed at a ratio of 9:1 (1:0.1) and the average cylinder temperature was set at 125°C, a molten mixture was obtained.

(Example 3)

In a manner similar to that of Example 1 except that a CNF water mixture (CNF solid content: 30%, water content: 70%, average polymerization degree: 810) derived from softwood pulp and an aqueous polyolefin resin dispersion (product of Mitsui Chemicals, CHEMIPEARL M200, LDPE, solid concentration: 40%, particle size: 0.7 μm (Coulter counter method), viscosity: 5000 mPa·s (Brookfield type viscometer 6 rpm))) were mixed at a ratio of 9:1 (1:0.1) and the average cylinder temperature was set at 125°C, a molten mixture was obtained.

(Example 4)

In a manner similar to that of Example 1 except that a CNF water mixture (CNF solid content: 30%, water content: 70%, average polymerization degree: 810) derived from softwood pulp and an aqueous polyolefin resin dispersion (product of Mitsui Chemicals, CHEMIPEARL S500, ionomer, solid concentration: 42%, particle size: 0.7 μm (Microtrac method), viscosity: 150 mPa·s (Brookfield type viscometer 6 rpm))) were mixed at a ratio of 9:1 (1:0.1) and the average cylinder temperature was set at 124°C, a molten mixture was obtained.

(Example 5)

In a manner similar to that of Example 1 except that a CNF water mixture (CNF solid content: 30%, water content: 70%, average polymerization degree: 810) derived from softwood pulp and an aqueous polyolefin resin dispersion (product of Mitsui Chemicals, CHEMIPEARL S300, ionomer, solid concentration: 35%, particle size: 0.5 μm (Microtrac method), viscosity: 400 mPa·s (Brookfield type viscometer 6 rpm))) were mixed at a ratio of 9:1 (1:0.1) and the average cylinder temperature was set at 125°C, a molten mixture was obtained.

(Example 6)

In a manner similar to that of Example 1 except that a CNF water mixture (CNF solid content: 30%, water content: 70%, average polymerization degree: 810) derived from softwood pulp and an aqueous polyolefin resin dispersion (product of Mitsui Chemicals, CHEMIPEARL W401, polyethylene wax, solid concentration: 40%, particle size: 1 μm (Microtrac method), viscosity: 500 mPa·s (Brookfield type viscometer 60 rpm))) were mixed at a ratio of 9:1 (1:0.1) and the average cylinder temperature was set at 127°C, a molten mixture was obtained.

(Example 7)

In a manner similar to that of Example 1 except that a CNF water mixture (CNF solid content: 30%, water content: 70%, average polymerization degree: 810) derived from softwood pulp and an aqueous polyolefin resin dispersion (product of Mitsui Chemicals, CHEMIPEARL W700, polyethylene wax, solid concentration: 40%, particle size: 1 μm (Microtrac method), viscosity: 800 mPa·s (Brookfield type viscometer 60 rpm))) were mixed at a ratio of 9:1 (1:0.1) and the average cylinder temperature was set at 125°C, a molten mixture was obtained.

(Example 8)

In a manner similar to that of Example 1 except that a CNF water mixture (CNF solid content: 20%, water content: 80%, average polymerization degree: 810) derived from softwood pulp and an aqueous polyolefin resin dispersion (product of Mitsui Chemicals, CHEMIPEARL W500, polyethylene wax, solid concentration: 40%, particle size: 2.5 μm (Coulter counter method), viscosity: 1000 mPa·s (Brookfield type viscometer 60 rpm))) were mixed at a ratio of 9:1 (1:0.1) and the average cylinder temperature was set at 128°C, a molten mixture was obtained.

(Example 9)

In a manner similar to that of Example 1 except that a CNF water mixture (CNF solid content: 30%, water content: 70%, average polymerization degree: 810) derived from softwood pulp and an aqueous polyolefin resin dispersion (product of Mitsui Chemicals, CHEMIPEARL S100, ionomer, solid concentration: 27%, particle size: 0.1 μm (Microtrac method), viscosity: 500 mPa·s (Brookfield type viscometer 6 rpm))) were mixed at a ratio of 9:1 (1:0.1) and the average cylinder temperature was set at 127°C, a molten mixture was obtained.

(Example 10)

In a manner similar to that of Example 1 except that a CNF water mixture (CNF solid content: 30%, water content: 70%, average polymerization degree: 810) derived from softwood pulp and an aqueous polyolefin resin dispersion (product of Mitsui Chemicals, CHEMIPEARL V300, EVA, solid concentration: 40%, particle size: 6 μm (Coulter counter method), viscosity: 7000 mPa·s (Brookfield type viscometer 6 rpm))) were mixed at a ratio of 9:1 (1:0.1) and the average cylinder temperature was set at 124°C, a molten mixture was obtained.

(Evaluation of yellowness of molten mixture)

The yellowness of the molten mixtures obtained in Examples 1 to 10 was evaluated according to JIS K 7373 by using a color difference meter (product of Nippon Denshoku Industries Co., Ltd., model: ZE6000, light source C/2). The following was the measuring method: a round cell to be used exclusively for powders was filled moderately with the molten mixture without a space and measurement was performed three times per sample.

The yellowness index (YI) was calculated using the following formula from the tristimulus values X, Y, and Z obtained by the above measurement.

$$YI = 100(1.2769X - 1.0592Z)/Y$$

The results are shown in Table 1.

[Table 1]

| | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|
| Yellownes s index | 13.5 | 14.5 | 14 | 20.4 | 29 | 14.1 | 15.9 | 14.3 | 28.3 | 15.6 |

(Example 11)

Using Mechano Hybrid (Nippon Coke & Engineering Co., Ltd., model: MMH-75B/I), a CNF water mixture (CNF solid content: 30%, water content: 70%, average polymerization degree: 810) derived from softwood pulp and an aqueous polyolefin resin dispersion (product of BYK JAPAN: HORDAMAR PE02), which were mixed at a ratio of 9:1 (1:0.1), and 3.3 parts by mass, based on 100 parts by mass of the resulting mixture, of 3-glycidoxypropyltriethoxysilane (product of Shin-Etsu Chemical Co., Ltd.: KBE-403) as a silane coupling agent were mixed to obtain a mixture.

The mixture thus obtained was subjected to a twin screw extruder (Japan Steel Works, Ltd., model: TEX25αIII) to obtain a molten mixture. The screw diameter was set at Φ25 mm and the average cylinder temperature was set at 123°C.

(Example 12)

In a manner similar to that of Example 11 except that 3-methacryloxypropyltrimethoxysilane (product of Shin-Etsu Chemical Co., Ltd.: KBE-503) was used as the silane coupling agent and the average cylinder temperature was set at 124°C, a molten mixture was obtained.

(Example 13)

In a manner similar to that of Example 11 except that N-2-(aminoethyl)-3-aminopropyltrimethoxysilane (product of Shin-Etsu Chemical Co., Ltd.: KBE-603) was used as the silane coupling agent and the average cylinder temperature was set at 124°C, a molten mixture was obtained.

(Example 14)

In a manner similar to that of Example 11 except that N-2-(aminoethyl)-3-aminopropyltrimethoxysilane (product of Shin-Etsu Chemical Co., Ltd.: KBE-603) diluted 20 times was used as the silane coupling agent and the average cylinder temperature was set at 123°C, a molten mixture was obtained.

(Example 15)

In a manner similar to that of Example 11 except that 13.2 parts by mass, based on 100 parts by mass of the mixture, of 3-glycidoxypropyltrimethoxysilane (product of Dow Toray: OFS-6040 Silane) was used as the silane coupling agent and the average cylinder temperature was set at 123°C, a molten mixture was obtained.

(Example 16)

In a manner similar to that of Example 11 except that 1.8 parts by mass, based on 100 parts by mass of the mixture, of 3-glycidoxypropyltrimethoxysilane (product of Dow Toray: OFS-6040 Silane) was used as a silane coupling agent and the average cylinder temperature was set at 123°C, a molten mixture was obtained.

(Example 17)

Using Mechano Hybrid (Nippon Coke & Engineering Co., Ltd., model: MMH-75B/I), a CNF water mixture (CNF solid content: 31%, water content: 69%, average polymerization degree: 810) derived from softwood pulp and an aqueous polyolefin resin dispersion (product of Mitsui Chemicals: CHEMIPEARL W401), which were mixed at a ratio of 9:1 (1:0.1), and 12 parts by mass, based on 100 parts by mass of the resulting mixture, of maleic anhydride-modified polypropylene ((product of BYK Japan: SCONA TSPP 22113GA)) were mixed to obtain a mixture.
The mixture thus obtained was subjected to a twin screw extruder (Japan Steel Works, Ltd., model: TEX25αIII) to obtain a molten mixture. The screw diameter was set at Φ25 mm and the average cylinder temperature was set at 128°C.

(Referential Example 1)

Using Mechano Hybrid (Nippon Coke & Engineering Co., Ltd., model: MMH-75B/I), a CNF water mixture (CNF solid content: 50%, water content: 50%, average polymerization degree: 810) derived from softwood pulp and an aqueous polyolefin resin dispersion (product of BYK JAPAN: HORDAMAR PE02) were mixed at a ratio of 9:1 (1:0.1) to obtain a mixture.
The mixture thus obtained was subjected to a twin screw extruder (Japan Steel Works, Ltd., model: TEX25αIII) to obtain a molten mixture. The screw diameter was set at Φ25 mm and the average cylinder temperature was set at 121°C.

(Measurement of moisture content of molten mixture)

The moisture content of the molten mixtures obtained in Examples 1 to 17 and Referential Example 1 was measured using an infrared halogen moisture analyzer (product of Mettler Toledo: model: HC103).
The results are shown in Tables 2 and 3.

[Table 2]

| | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|
| Moisture content (%) | 0.35 | 0.79 | 0.25 | 0.35 | 0.28 | 0.38 | 0.16 | 1.3 | 0.23 | 0.23 |

[Table 3]

| | Ex. 11 | Ex. 12 | Ex. 13 | Ex. 14 | Ex. 15 | Ex. 16 | Ex. 17 | Comp. Ex. 1 |
|---|---|---|---|---|---|---|---|---|
| Moisture content (%) | 0.17 | 0.11 | 0.34 | 0.24 | 0.13 | 0.43 | 0.1 | 5.3 |

(Example 18)

Using Mechano Hybrid (product of Nippon Coke & Engineering Co., Ltd.: model: MMH-75B/I), a CNF water mixture (CNF solid content: 30%, water content: 70%, average polymerization degree: 810) derived from softwood pulp and an aqueous polyolefin resin dispersion (product of BYK JAPAN: HORDAMAR PE02,) were mixed at a mass% ratio of 9:1 to obtain a mixture.
Next, the mixture thus obtained was subjected to a twin screw extruder (Japan Steel Works, Ltd., model: TEX25αIII) to obtain a molten mixture. The screw diameter was set at Φ25 mm and the average cylinder temperature was set at 125°C.
Next, the molten mixture thus obtained, polypropylene (product of Prime Polymer Co., Ltd.: J105G, injection molding grade, MFR9), and maleic anhydride-modified polypropylene ((product of BYK Japan: SCONA TSPP 22113GA)) were mixed at a mass% ratio of 33.3:64.7:2.0. The resulting mixture was supplied to a twin screw extruder (Japan Steel Works, Ltd., model: TEX25αIII) and melt kneaded at 180°C to pelletize it.
The pellets thus obtained were dried at 80°C for 12 hours and then, injection molded using an injection molding machine (Nissei Plastic Industrial Co., Ltd., model: NEX801V) under the following conditions: a cylinder temperature of 190°C and a mold temperature of 50°C to prepare a multi-purpose specimen A1.

(Example 19)

Using Mechano Hybrid (product of Nippon Coke & Engineering Co., Ltd., model: MMH-75B/I), a CNF water mixture (CNF solid content: 30%, water content: 70%, average polymerization degree: 810) derived from softwood pulp and an aqueous polyolefin resin dispersion (product of BYK JAPAN: HORDAMAR PE02) were mixed at a mass% ratio of

9:1 to obtain a mixture.

Next, the mixture thus obtained and 3.3 parts by mass, based on 100 parts by mass of the mixture, of 3-glycidoxypropyltriethoxysilane (product of Shin-Etsu Chemical, KBE-403) as a silane coupling agent were subjected to a twin screw extruder (Japan Steel Works, Ltd., model: TEX25αIII) to obtain a molten mixture. The screw diameter was set at Φ25 mm and the average cylinder temperature was set at 123°C.

Next, the molten mixture thus obtained, polypropylene (product of Nippon Polypropylene Corporation: J105G, injection molding grade, MFR9), and maleic anhydride-modified polypropylene (product of BYK Japan: SCONA TSPP 22113GA) were mixed at a mass% ratio of 34.3:64.7:1. The resulting mixture was supplied to a twin screw extruder (Japan Steel Works, Ltd., model: TEX25αIII) and melt kneaded at 180°C to pelletize it.

The pellets thus obtained were dried at 80°C for 12 hours and then, were injection molded using an injection molding machine (Nissei Plastic Industrial Co., Ltd., model: NEX801V) under the following conditions: a cylinder temperature of 190°C and a mold temperature of 50°C to prepare a multi-purpose specimen A1.

(Example 20)

In a manner similar to that of Example 19 except that the molten mixture, the polypropylene, and the maleic anhydride-modified polypropylene were mixed at a ratio of 57.7:34.3:8, a multi-purpose specimen A1 was prepared.

(Examples 21 to 30)

Each of the molten mixtures obtained in Example 2 to Example 8, Examples 15 to17, and Referential Example 1, polypropylene (product of Prime Polymer Co., Ltd.: J105G, injection molding grade: MFR9), and maleic anhydride-modified polypropylene (product of BYK Japan: SCONA TSPP 22113GA) were mixed at a mass% ratio of 64.7:33.3:2.0. The resulting mixture was supplied to a twin screw extruder (Japan Steel Works, Ltd., model: TEX25αIII) and melt kneaded at 180°C to pelletize it.

The pellets thus obtained were dried at 80°C for 12 hours and then, injection molded using an injection molding machine (Nissei Plastic Industrial Co., Ltd., model: NEX81V) under the following conditions: a cylinder temperature of 190°C and a mold temperature of 50°C to prepare a multi-purpose specimen A1.

(Comparative Example 1)

Polypropylene (product of Prime Polymer Co., Ltd.: J105G, injection molding grade, MFR9) was injection molded using an injection molding machine (Nissei Plastic Industrial Co., Ltd., model: NEX801V) under the following conditions: a cylinder temperature of 190°C and a mold temperature of 50°C to prepare a multi-purpose specimen A1.

(Comparative Example 2)

Using Mechano Hybrid (Nippon Coke & Engineering Co., Ltd., model: MMH-75B/I), a CNF water mixture (CNF solid content: 30%, water content: 70%, average polymerization degree: 810) derived from softwood pulp and a styrene-based polymer (Yasuhara Chemical Co., Ltd., YS Resin SX100) were mixed at a mass % ratio of 7:3.

Then, the resulting mixture of CNF and styrene-based polymer was subjected to a twin screw extruder (Japan Steel Works, Ltd., model: TEX25αIII) to obtain powdery cellulose nanofiber. The screw diameter was set at Φ25 mm and the average cylinder temperature was set at 113°C.

The powdery cellulose nanofiber thus obtained, polypropylene (product of Primer Polymer Co., Ltd.: J105G, injection molding grade, MFR9), and maleic anhydride-modified polypropylene ((product of BYK Japan: SCONA TSPP 22113GA) were mixed at a mass% ratio of 42.9:55.1:2.0. The resulting mixture was supplied to a twin screw extruder (Japan Steel Works, Ltd., model: TEX25αIII) and melt kneaded at 180°C to pelletize it.

The pellets thus obtained were dried at 80°C for 12 hours and then, injection molded using an injection molding machine (Nissei Plastic Industrial Co., Ltd., model: NEX801V) under the following conditions: a cylinder temperature of 190°C and a mold temperature of 50°C to prepare a multi-purpose specimen A1.

(Measurement of physical properties)

With regard to the strength physical properties of the specimens (the CNF amount was 10% (except Comparative Example 1)) obtained in Example 18 to Example 30 and Comparative Examples 1 and 2, flexural strength measurement (modulus in flexure, flexure stress, and bending strain) and tensile strength measurement (modulus in tension, tensile stress at yield, tensile strain at yield, tensile stress at break, and tensile strain at break) were performed. Each measurement was performed using a compact table-top tester (product of Shimadzu Corporation, model: Ex-LX).

Flexural strength measurement was performed with a specimen in strip form under the conditions of a flexural test speed of 2.0 mm/min and tensile strength measurement was performed with a dumbbell specimen A1 under the conditions of a tensile test speed of 50 mm/min. The results are shown in Table 4 and Table 6.

(Charpy impact test)

The specimens obtained in Example 18 to Example 30 and Comparative Examples 1 and 2 were subjected to an impact test in accordance with JIS K7111-1:2012 by using a digital impact tester (Toyo Seiki Seisaku-sho, Ltd., model: Impact tester IT, hammer capacity: 0.5 J). The results are shown in Table 4 to Table 6.

[Table 4]

| | Ex. 18 | Ex. 19 | Ex. 20 |
|---|---|---|---|
| Modulus in tension | 2300 | 2360 | 2370 |
| Tensile stress at yield | 40 | 40 | 42 |
| Tensile strain at yield | 7.1 | 6.3 | 7.1 |
| Tensile stress at break | 37.5 | 38.2 | 39.1 |
| Tensile strain at break | 13.5 | 9.8 | 13.9 |
| Modulus in flexure | 2260 | 2160 | 2120 |
| Flexure stress | 55 | 53 | 54 |
| Flexure strain | 6.6 | 6.7 | 6.9 |
| Charpy | 2.7 | 2.4 | 3.1 |

[Table 5]

| | Ex. 21 | Ex. 22 | Ex. 23 | Ex. 24 | Ex. 25 | Ex. 26 | Ex. 27 |
|---|---|---|---|---|---|---|---|
| Modulus in tension | 2560 | 2520 | 2600 | 2420 | 2420 | 2410 | 2330 |
| Tensile stress at yield | 40 | 40 | 39 | 39 | 40 | 40 | 39 |
| Tensile strain at yield | 6.5 | 6.8 | 6.8 | 7.2 | 7.2 | 7.0 | 6.8 |
| Tensile stress at break | 37.1 | 37 | 36.9 | 36.2 | 37.1 | 36.8 | 36.5 |
| Tensile strain at break | 16.8 | 16.4 | 11.4 | 13.5 | 14.1 | 15.1 | 15.1 |
| Modulus in flexure | 2170 | 2160 | 2120 | 2240 | 2190 | 2210 | 2150 |
| Flexure stress | 57 | 56 | 54 | 59 | 57 | 55 | 54 |
| Flexure strain | 6.7 | 6.7 | 6.8 | 6.8 | 6.8 | 6.6 | 6.7 |
| Charpy | 3.3 | 3.1 | 2.8 | 3.1 | 3.3 | 2.8 | 3.0 |

[Table 6]

| | Ex. 28 | Ex. 29 | Ex. 30 | Comp. Ex. 1 | Comp. Ex. 2 |
|---|---|---|---|---|---|
| Modulus in tension | 2420 | 2350 | 1950 | 1700 | 2170 |
| Tensile stress at yield | 40 | 41 | 40 | 33 | 38 |
| Tensile strain at yield | 7.1 | 7.8 | 6.7 | 7.8 | 5.5 |
| Tensile stress at break | 39.1 | 39.6 | 35.8 | 26.3 | 35.3 |
| Tensile strain at break | 11.6 | 11.2 | 20.8 | 20.7 | 12.2 |
| Modulus in flexure | 2110 | 2330 | 2290 | 1630 | 2240 |
| Flexure stress | 53 | 60 | 56 | 44 | 56 |
| Flexure strain | 6.8 | 6.7 | 6.6 | 7.0 | 6.3 |

(continued)

| | Ex. 28 | Ex. 29 | Ex. 30 | Comp. Ex. 1 | Comp. Ex. 2 |
|---|---|---|---|---|---|
| Charpy | 2.4 | 2.8 | 3.1 | 2.3 | 2.3 |

The results in Table 4 to Table 6 have revealed that the specimens obtained in Examples have improved tensile stress at yield and Charpy impact strength compared with those obtained in Comparative Example 1 and Comparative Example 2. In addition, the results have also revealed that the tensile strain at yield of Examples 21 to 30 was higher than that of Comparative Example 2, which is presumed to occur because an increase in tensile strain at yield improves the interfacial adhesion between the resin and CNF, resulting in an increase in tensile stress at yield and improvement in Charpy impact value.

(Measurement of dispersibility evaluation value of composition) By the following method, a sheet was formed using the pellets obtained in Examples 21 to 30, Comparative Example 2, and Referential Example 1 and the number of aggregates present in the sheet was visually counted. The results are shown in Table 7.

- Dispersibility evaluation value measurement method -

(1) Preheat 0.03 g with a hot press of 200°C for 1 minute and 30 seconds.
(2) After preheating, apply a pressure of 0.6 MPa to the composition for 30 seconds to form 12 sheets having a size of 30 μm.
(3) Visually count the number of aggregates present in the resulting sheet and designate the total number of the aggregates as a dispersibility evaluation value.

[Table 7]

| | Ex.21 | Ex.22 | Ex.23 | Ex.24 | Ex.25 | Ex.26 | Ex.27 | Ex.28 | Ex.29 | Ex.30 | Comp. Ex.2 | Ref. Ex.1 |
|---|---|---|---|---|---|---|---|---|---|---|---|---|
| Dispersibility evaluation | 20 | 1 | 1 | 4 | 4 | 0 | 0 | 0 | 0 | 8 | 48 | 222 |

The results of Table 7 have revealed that the composition according to the present invention is excellent in dispersibility.

[Industrial Applicability]

The molten mixture of the present invention excellent in uniform dispersibility in resins, compatibility with resins, and interfacial adhesion can be easily and uniformly blended with thermoplastic resins, thermosetting resins, or rubber components. In addition, parts for various purposes can be obtained from it by a general resin molding or forming method such as injection molding. For example, it can be used preferably for industrial machinery parts, general machinery parts, automobile·railway·vehicle parts (for example, outer panels, chassis, aerodynamic members, tires, and seats), ship members (for example, hulls and seats), aviation-related parts (for example, seats and interior materials), spacecraft·artificial satellite members (such as motor cases and antennas), electronic·electrical parts, sliding members (such as gears, gears, bearings, and metals), construction·civil engineering materials water treatment materials (such as vibration isolation materials and bearings), paints inks, adhesives·sealants·coating agents·binder agents, packaging·-wrapping·film materials, and the like.

## Claims

**1.** A molten mixture, comprising a mixture containing a cellulose nanofiber and a solvent and 0.05 to 1 part by mass, based on 1 part by mass of the cellulose nanofiber, of an aqueous polyolefin resin dispersion.

**2.** The molten mixture according to claim 1, wherein the molten mixture has a YI of 29 or less.

**3.** The molten mixture according to claim 1 or claim 2, further comprising a silane coupling agent in an amount of 1.8 parts by mass or more and 13.2 parts by mass or less based on 100 parts by mass of the molten mixture.

**4.** The molten mixture according to claim 1 or claim 2, further comprising a modified polyolefin in an amount of 1 part by mass or more and 30 parts by mass or less based on 100 parts by mass of the molten mixture.

**5.** The molten mixture according to claim 1 or claim 2, further comprising a modified polyolefin in an amount of 1 part by mass or more and 30 parts by mass or less and a silane coupling agent in an amount of 1.8 parts by mass or more and 13.2 parts by mass or less, each based on 100 parts by mass of the molten mixture.

**6.** A composition comprising the molten mixture as claimed in claim 1 to claim 5 and one or two or more components selected from a thermoplastic resin, a thermosetting resin, and a rubber.

**7.** A composition comprising:

the molten mixture as claimed in claim 1 to claim 3,
one or two or more components selected from, a thermoplastic resin, a thermosetting resin, and a rubber, and a modified polyolefin.

**8.** A composition, comprising:

the molten mixture as claimed in claim 1 to claim 3,
one or two or more components selected from a thermoplastic resin, a thermosetting resin, and a rubber, and a modified polyolefin, wherein:

when a total amount of the molten mixture, the modified polyolefin, and the one or two or more components is 100 parts by mass,
the molten mixture is contained in an amount of 0.5 to 60 parts by mass,
the one or two or more components are contained in an amount of 35 to 99 parts by mass, and
the modified polyolefin is contained in an amount of 0.5 to 5 parts by mass.

**9.** The composition according to claim 8, wherein a dispersibility evaluation value under the following measurement conditions is 20 or less.
- Dispersibility evaluation value measurement method -

(1) Preheat 0.03 g with a hot press of 200°C for 1 minute and 30 seconds.
(2) After preheating, apply a pressure of 0.6 MPa to the composition for 30 seconds to form 12 sheets having a sheet diameter of 30 μm.
(3) Visually count the number of aggregates present in the resulting sheet and designate the total number of the aggregates as a dispersibility evaluation value.

**10.** A molded or formed product obtained by molding or forming the composition as claimed in claim 6 to claim 9.

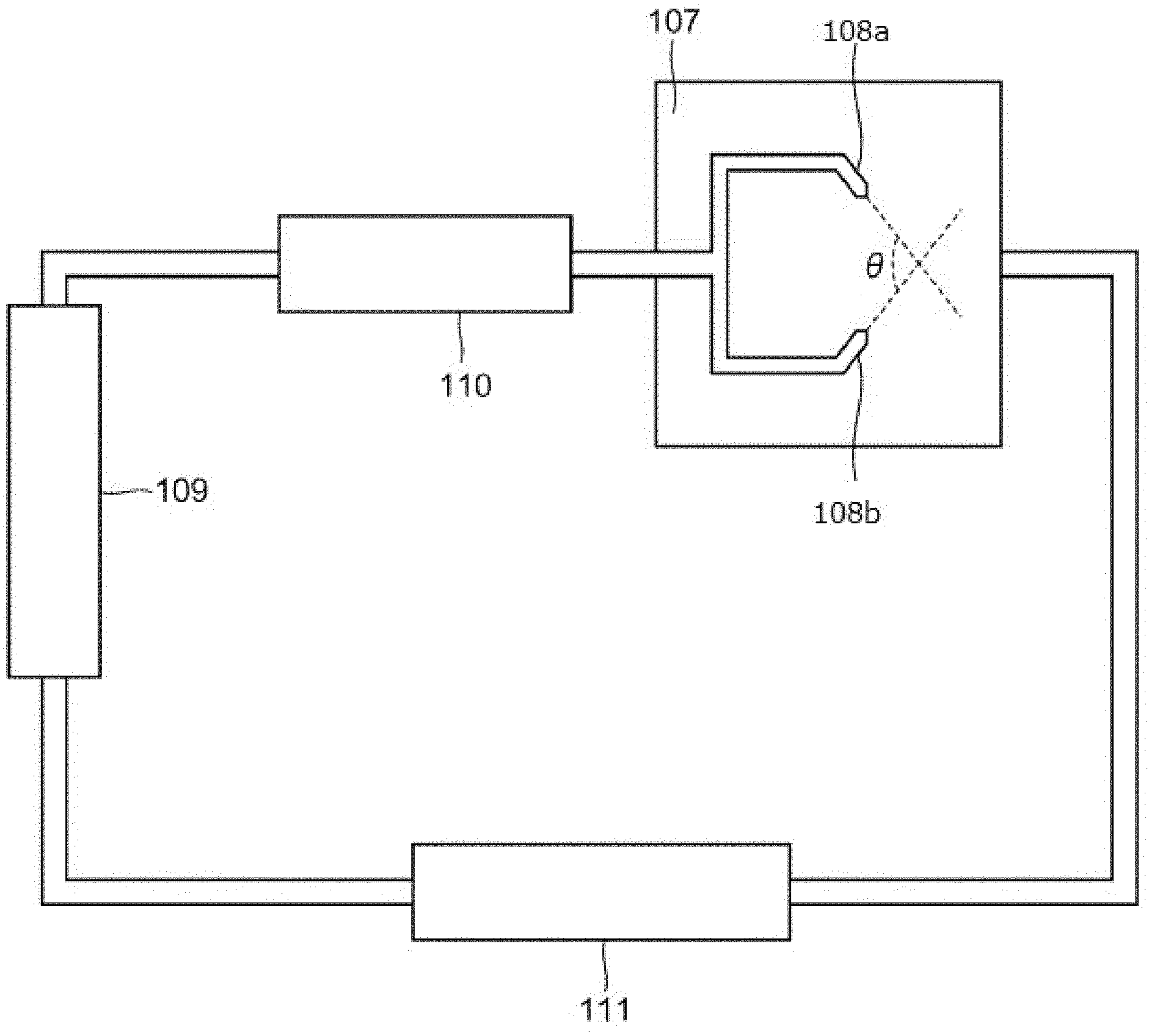


FIG. 1

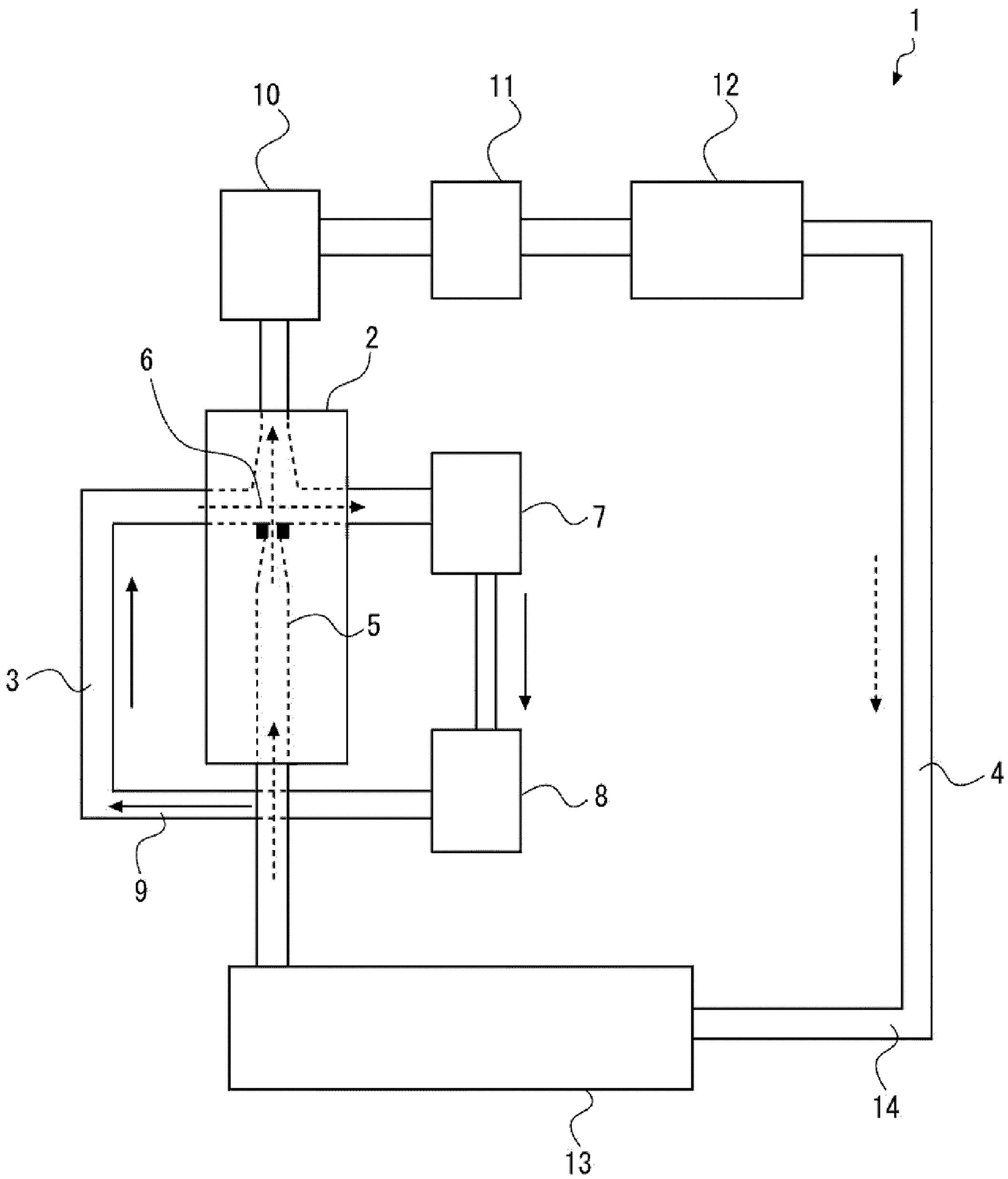


FIG. 2

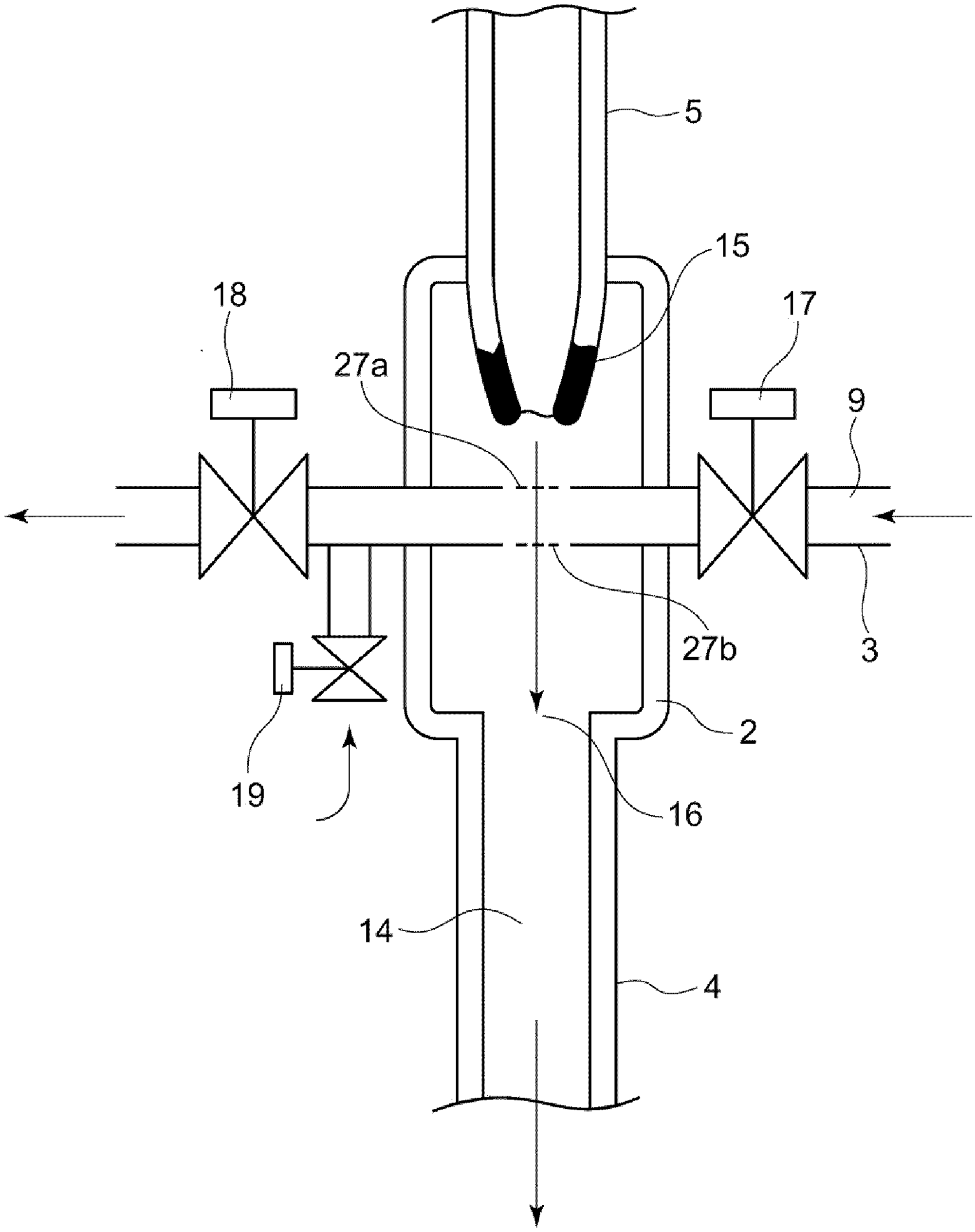


FIG. 3

## INTERNATIONAL SEARCH REPORT

International application No.
**PCT/JP2022/016616**

**A. CLASSIFICATION OF SUBJECT MATTER**

***C08L 1/02***(2006.01)i; ***C08J 3/20***(2006.01)i; ***C08L 23/00***(2006.01)i; ***C08L 23/26***(2006.01)i
FI: C08L1/02; C08J3/20 Z CEP; C08L23/00; C08L23/26

According to International Patent Classification (IPC) or to both national classification and IPC

**B. FIELDS SEARCHED**

Minimum documentation searched (classification system followed by classification symbols)

C08L1/02; C08J3/20; C08L23/00; C08L23/26

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-75996 A (BANDO CHEM. IND. LTD.) 21 May 2020 (2020-05-21)<br>entire text | 1-10 |
| A | JP 2021-138875 A (UNITIKA LTD.) 16 September 2021 (2021-09-16)<br>entire text | 1-10 |
| A | JP 2017-141323 A (DAINICHISEIKA COLOR & CHEM. MFG. CO., LTD.) 17 August 2017 (2017-08-17)<br>entire text | 1-10 |
| A | JP 2022-45900 A (SANYO CHEM. IND. LTD.) 22 March 2022 (2022-03-22)<br>entire text | 1-10 |
| A | JP 2019-14845 A (DU PONT MITSUI POLYCHEM. CO., LTD.) 31 January 2019 (2019-01-31)<br>entire text | 1-10 |
| A | JP 2019-26702 A (TOYO RESIN KK) 21 February 2019 (2019-02-21)<br>entire text | 1-10 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 May 2022** | **24 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/016616**

**C. DOCUMENTS CONSIDERED TO BE RELEVANT**

| Category* | Citation of document, with indication, where appropriate, of the relevant passages | Relevant to claim No. |
|---|---|---|
| A | JP 2020-63347 A (ASAHI KASEI CORP.) 23 April 2020 (2020-04-23)<br>entire text | 1-10 |

Form PCT/ISA/210 (second sheet) (January 2015)

**INTERNATIONAL SEARCH REPORT**
**Information on patent family members**

International application No.
**PCT/JP2022/016616**

| Patent document cited in search report | Publication date (day/month/year) | Patent family member(s) | Publication date (day/month/year) |
|---|---|---|---|
| JP 2020-75996 A | 21 May 2020 | (Family: none) | |
| JP 2021-138875 A | 16 September 2021 | (Family: none) | |
| JP 2017-141323 A | 17 August 2017 | (Family: none) | |
| JP 2022-45900 A | 22 March 2022 | (Family: none) | |
| JP 2019-14845 A | 31 January 2019 | (Family: none) | |
| JP 2019-26702 A | 21 February 2019 | (Family: none) | |
| JP 2020-63347 A | 23 April 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6502645 B
- JP 6704551 B